# EUROPÄISCHE PATENTANMELDUNG

(11) **EP 4 738 914 A1**
(43) Veröffentlichungstag der Anmeldung: **06.05.2026**
(21) Anmeldenummer: 25212604.0
(22) Anmeldetag: 31.10.2025
(51) Int. Cl.: H04W 24/02, H04W 16/18, H04W 24/08, H04W 88/08

(54) **NETZWERKVERFAHREN, NETZWERKSYSTEM, COMPUTERPROGRAMMPRODUKT UND COMPUTERLESBARES MEDIUM**

(30) Priorität: 05.11.2024 DE 102024132228
(71) Anmelder: Uniberg GmbH, 23816 Bebensee (DE)
(72) Erfinder: Möller, Andreas, 61462 Königstein (DE); Rathke, Nils, 23689 Techau (DE); Hofmann, Robin, 64295 Darmstadt (DE); Schönfeld, Jonathan, 60594 Frankfurt am Main (DE)
(74) Vertreter: Bals & Vogel Patentanwälte PartGmbB

(57) **Zusammenfassung**

Die vorliegende Erfindung betrifft ein Netzwerkverfahren (200) zum Erzeugen (202) und Anpassen (208) eines nicht öffentlichen Netzwerks (190) zum Senden und Empfangen von Daten (D) durch Endgeräte (180), insbesondere für einen Betrieb einer Baustelle (150), durch ein Netzwerksystem (10), das Netzwerkverfahren (200) umfassend:
- Erzeugen (202) eines nicht öffentlichen Netzwerks (190) zum Senden und Empfangen von Daten (D) durch Endgeräte (180) durch zumindest eine Kommunikationsvorrichtung (20) des Netzwerksystems (10),
- Erfassen (204) zumindest eines Leistungsparameters (LP) der Kommunikationsvorrichtung (20) und/oder der Endgeräte (180) durch eine Erfassungsvorrichtung (40) des Netzwerksystems (10),
- Bereitstellen (206) von Planungsdaten (PD) für eine zeitliche Entwicklung des Netzwerksystems (10) und/oder der Baustelle (150) durch eine Schnittstellenvorrichtung (50) des Netzwerksystems (10),
- Anpassen (208) der Leistung der zumindest einen Kommunikationsvorrichtung (20) auf Grundlage der erfassten Leistungsparameter (LP) und der bereitgestellten Planungsdaten (PD) durch eine Logikvorrichtung (30) des Netzwerksystems (10).

Ferner betrifft die Erfindung ein Netzwerksystem (10) zum Erzeugen und Anpassen eines nicht öffentlichen Netzwerks (190) zum Senden und Empfangen von Daten (D) durch Endgeräte (180). Ferner betrifft die Erfindung ein Computerprogrammprodukt (300) sowie ein computerlesbares Medium (400).

## Beschreibung

Die vorliegende Erfindung betrifft ein Netzwerkverfahren zum Erzeugen und Anpassen eines nicht öffentlichen Netzwerks zum Senden und Empfangen von Daten durch Endgeräte, insbesondere für einen Betrieb einer Baustelle, durch ein Netzwerksystem. Ferner betrifft die Erfindung ein Netzwerksystem zum Erzeugen und Anpassen eines nicht öffentlichen Netzwerks zum Senden und Empfangen von Daten durch Endgeräte, insbesondere für einen Betrieb einer Baustelle. Ferner betrifft die Erfindung ein Computerprogrammprodukt zum Erzeugen und Anpassen eines nicht öffentlichen Netzwerks zum Senden und Empfangen von Daten durch Endgeräte durch ein Netzwerksystem sowie ein computerlesbares Medium mit dem Computerprogrammprodukt.

Die derzeitig öffentlich bekannten Verfahren zum Bereitstellen eines nicht öffentlichen Netzwerks, insbesondere auf einer Baustelle, sehen zumeist geringe Reichweiten und/oder keine Anpassungen des Netzwerks an veränderte und/oder verändernde Bedingungen, insbesondere auf der Baustelle, vor. Der Bedarf an Netzwerksystemen zum Datenaustausch nimmt stetig zu und das in der Anmeldung bevorzugte, beispielhafte Szenario einer Baustelle stellt eine sich stark verändernde Umgebung und damit unterschiedliche Anforderungen an ein Netzwerksystem dar.

Ein statisches Netzwerksystem ist in dem beispielhaften Szenario der Baustelle entweder zeitweise überdimensioniert oder zeitweise unterdimensioniert. Anschaulich wächst oder schrumpft eine Baustelle und damit die Anforderungen an das Netzwerksystem, je nachdem, ob ein Gebäude gebaut, umgebaut oder abgerissen wird. Das beispielhafte Szenario der Baustelle weist ferner stark variierende Nutzerzahlen auf. Bekannte Netzwerksysteme und Netzwerkverfahren stellen keine ausreichende Flexibilität und/oder Anpassungsmöglichkeiten dar, um stets ein möglichst vorteilhaftes, nicht öffentliches Netzwerk zum Senden und Empfangen von Daten durch Endgeräte, insbesondere für einen Betrieb einer Baustelle, bereitzustellen.

Es ist daher Aufgabe der vorliegenden Erfindung, die oben beschriebenen Nachteile im Stand der Technik zu beheben oder zumindest teilweise zu beheben. Insbesondere ist es Aufgabe der Erfindung, ein Netzwerkverfahren bereitzustellen, mit dem ein Erzeugen und Anpassen eines nicht öffentlichen Netzwerks zum Senden und Empfangen von Daten durch Endgeräte, insbesondere für einen Betrieb einer Baustelle, durch ein Netzwerksystem besonders einfach ermöglicht wird. Insbesondere ist es ferner die Aufgabe der Erfindung, ein Netzwerksystem zum Erzeugen und Anpassen eines nicht öffentlichen Netzwerks zum Senden und Empfangen von Daten durch Endgeräte, insbesondere für einen Betrieb einer Baustelle, bereitzustellen.

Die voranstehende Aufgabe wird durch die Patentansprüche gelöst. Insbesondere wird die Aufgabe gelöst durch ein Netzwerkverfahren mit den Merkmalen des unabhängigen Anspruchs 1. Ferner wird die Aufgabe gelöst durch ein Netzwerksystem mit den Merkmalen des unabhängigen Anspruchs 12, durch ein Computerprogrammprodukt mit den Merkmalen des unabhängigen Anspruchs 14 sowie durch ein computerlesbares Medium mit den Merkmalen des unabhängigen Anspruchs 15. Weitere Vorteile und Details der Erfindung ergeben sich aus den Unteransprüchen, der Beschreibung und den Zeichnungen. Dabei gelten Merkmale, die im Zusammenhang mit dem erfindungsgemäßen Netzwerkverfahren beschrieben sind, selbstverständlich auch im Zusammenhang mit dem erfindungsgemäßen Netzwerksystem, dem erfindungsgemäßen Computerprogrammprodukt, dem erfindungsgemäßen computerlesbaren Medium und jeweils umgekehrt, sodass bezüglich der Offenbarung zu den einzelnen Erfindungsaspekten stets wechselseitig Bezug genommen wird beziehungsweise werden kann.

Gemäß einem ersten Aspekt der Erfindung wird die Aufgabe gelöst durch ein Netzwerkverfahren zum Erzeugen und Anpassen eines nicht öffentlichen Netzwerks zum Senden und Empfangen von Daten durch Endgeräte, insbesondere für einen Betrieb einer Baustelle, durch ein Netzwerksystem. Das Netzwerkverfahren umfasst:
- Erzeugen eines nicht öffentlichen Netzwerks zum Senden und Empfangen von Daten durch Endgeräte durch zumindest eine Kommunikationsvorrichtung des Netzwerksystems,
- Erfassen zumindest eines Leistungsparameters der Kommunikationsvorrichtung und/oder der Endgeräte durch eine Erfassungsvorrichtung des Netzwerksystems,
- Bereitstellen von Planungsdaten für eine zeitliche Entwicklung des Netzwerksystems und/oder der Baustelle durch eine Schnittstellenvorrichtung des Netzwerksystems,
- Anpassen einer Leistung der zumindest einen Kommunikationsvorrichtung auf Grundlage der erfassten Leistungsparameter und der bereitgestellten Planungsdaten durch eine Logikvorrichtung des Netzwerksystems.

Die zuvor und im Nachfolgenden beschriebenen Verfahrensschritte können, wenn nicht explizit anderweitig angegeben, einzeln, zusammen, einfach, mehrfach, zeitlich parallel und/oder nacheinander in beliebiger Reihenfolge ausgeführt werden. Eine Benennung als beispielsweise "erster Verfahrensschritt" und "zweiter Verfahrensschritt" bedingt keine zeitliche Reihenfolge und/oder Priorisierung. Eine bevorzugte Reihenfolge der Verfahrensschritte sieht vor, dass die Verfahrensschritte in der aufgeführten Reihenfolge ausgeführt werden.

Das nicht öffentliche Netzwerk ist im Rahmen der Erfindung bevorzugt als ein temporäres Netzwerk zur Verwendung auf beispielsweise einer Baustelle zu verstehen. Das temporäre Netzwerk wird folglich bevorzugt für die Dauer eines Projekts, wie beispielsweise den Bau, Umbau oder Abriss eines Gebäudes und/oder eines Geländes, durch das Netzwerksystem erzeugt und nach Beendigung des Projektes wieder entfernt. Das nicht öffentliche Netzwerk ist dabei bevorzugt als ein Netzwerk für einen begrenzten Anwenderkreis, beispielhaft für die zugangsberechtigten Arbeitskräfte einer Baustelle, zu verstehen. Das nicht öffentliche Netzwerk ist insbesondere in Abgrenzung von öffentlichen Mobilfunknetzen zu verstehen und bevorzugt privat und/oder zugangsbeschränkt ausgestaltet. Das nicht öffentliche Netzwerk und das Netzwerksystem weisen bevorzugt jedoch eine Netzwerk-Schnittstelle zur Verbindung mit einem öffentlichen Mobilfunknetz auf.

Die Endgeräte sind im Rahmen der Erfindung als mobile oder stationäre Endgeräte, wie Messvorrichtungen, Telefone, Rechnereinheiten, Servervorrichtungen, Tablets und/oder Mobilfunkgeräte zu verstehen.

Das nicht öffentliche Netzwerk ermöglicht den Endgeräten bevorzugt einen Daten- und/oder Signalaustausch untereinander und/oder mit weiteren Netzwerkteilnehmern, wie beispielsweise Servervorrichtungen und/oder einen Zugriff zu einem verbundenen, öffentlichen Mobilfunknetz.

Die zumindest eine Kommunikationsvorrichtung ist zum Erzeugen des nicht öffentlichen Netzwerks zum Senden und Empfangen von Daten durch die Endgeräte ausgestaltet. Die zumindest eine Kommunikationsvorrichtung ist bevorzugt als Antennensystem, als Funksystem und/oder als Sende- und Empfangsvorrichtung ausgestaltet.

Das erfindungsgemäße Netzwerkverfahren ist besonders vorteilhaft, da ein Anpassen der Leistung der zumindest einen Kommunikationsvorrichtung ermöglich wird. Das Anpassen erfolgt auf Grundlage der erfassten Leistungsparameter und der bereitgestellten Planungsdaten durch eine Logikvorrichtung des Netzwerksystems.

Die Leistungsparameter werden durch eine Erfassungsvorrichtung des Netzwerksystems erfasst und stellen bevorzugt eine Erfassung und/oder eine Messung der tatsächlich vorliegenden, technischen Parameter des Netzwerksystems und/oder der Endgeräte dar. Die bereitgestellten Planungsdaten stellen hingegen bevorzugt eine theoretische Grundlage für ein Anpassen der Leistung der zumindest einen Kommunikationsvorrichtung dar. Die bereitgestellten Planungsdaten sind beispielhaft als ein ermittelter Zeitplan für den ebenfalls beispielhaften Baufortschritt der Baustelle zu verstehen. Besonders bevorzugt umfassen die bereitgestellten Planungsdaten eine Bauwerksdatenmodellierung. Die bereitgestellten Planungsdaten sind bevorzugt auf einer Speichervorrichtung der Logikvorrichtung gespeichert und/oder speicherbar. Alternativ oder zusätzlich umfasst die Logikvorrichtung eine Schnittstelle zur Eingabe und/oder zum Aufspielen der Planungsdaten.

Beispielhaft und anschaulich formuliert ermöglicht das erfindungsgemäße Netzwerkverfahren die temporäre Verwendung privater Netzwerk-Infrastruktur auf einer Baustelle zur Erzeugung eines nicht öffentlichen Netzwerks. Dabei verändern sich aufgrund der beispielhaften fortschreitenden Bauphasen die Anforderungen an das nicht öffentliche Netzwerk. Das erfindungsgemäße Netzwerkverfahren ermöglicht bevorzugt, dass die Funkabdeckung des nicht öffentlichen Netzwerks vorteilhaft an die Anforderungen der Bauphasen angepasst wird.

Das erfindungsgemäße Netzwerkverfahren ermöglicht ferner bevorzugt die Verwendung einer Datengrundlage zur Steuerung und/oder Regelung der zumindest einen Kommunikationsvorrichtung für die Einstellung der Funkabdeckung des nicht öffentlichen Netzwerks. Die Datengrundlage umfasst dabei bevorzugt eine Kombination der Daten der Planung für das nicht öffentliche Netzwerk und der Daten der Planung der Baustelle und/oder des Bauwerks.

Im Ergebnis ermöglicht das erfindungsgemäße Netzwerkverfahren bevorzugt eine vorteilhafte Anpassung des nicht öffentlichen Netzwerks und damit eine bedarfsgerechte Funkabdeckung für die fortschreitenden Bauphasen einer Gebäudebaustelle. Die Anpassungen erfolgen bevorzugt zumindest abschnittsweise automatisiert und das erfindungsgemäße Netzwerkverfahren und/oder das erfindungsgemäße Netzwerksystem ermöglichen eine Entscheidung der Verfahrensschritte und/oder eine Einstellung der Systemkomponenten auf Grundlage der Planung des nicht öffentlichen Netzwerks und der Planungsdaten.

Ein derart ausgestaltetes Netzwerkverfahren ist besonders vorteilhaft, da ein Erzeugen und Anpassen eines nicht öffentlichen Netzwerks zum Senden und Empfangen von Daten durch Endgeräte, insbesondere für einen Betrieb einer Baustelle, durch ein Netzwerksystem besonders einfach ermöglicht wird.

Gemäß einer bevorzugten Weiterentwicklung der Erfindung kann bei einem Netzwerkverfahren vorgesehen sein, dass das Anpassen der Leistung der zumindest einen Kommunikationsvorrichtung zumindest einen der folgenden Schritte umfasst:
- Anpassen einer Höhe der zumindest einen Kommunikationsvorrichtung,
- Aktivieren und/oder Deaktivieren weiterer Kommunikationsvorrichtungen,
- Anpassen, Aktivieren und/oder Deaktivieren von Sende- und Empfangsfrequenzen der zumindest einen Kommunikationsvorrichtung.

Das Anpassen der Leistung der zumindest einen Kommunikationsvorrichtung kann auf eine Vielzahl verschiedener Wege und/oder einer Kombination aus den voranstehenden Schritten ermöglicht werden. Die Höhe (gemeint ist: tatsächlicher Abstand zu einem Boden) der zumindest einen Kommunikationsvorrichtung ist bevorzugt als eine Höhe der zumindest einen Kommunikationsvorrichtung über einem Grund oder Boden zu verstehen. Beispielsweise wird ein Sendemastturm mit der zumindest einen Kommunikationsvorrichtung für das Anpassen der Höhe ein- oder ausgefahren. Das Aktivieren und/oder Deaktivieren von weiteren Kommunikationsvorrichtungen ermöglicht vorteilhaft ein Anpassen der Leistungsstärke und/oder Leistungsrichtung. Das Aktivieren und/oder Deaktivieren weiterer Kommunikationsvorrichtungen umfasst bevorzugt das Aktivieren und/oder Deaktivieren von identischen Kommunikationsvorrichtungen zur ersten Kommunikationsvorrichtung und/oder ein Aktivieren und/oder Deaktivieren von unterschiedlich ausgestalteten Kommunikationsvorrichtungen beispielsweise Repeater-Vorrichtungen. Durch ein Anpassen, Aktivieren und/oder Deaktivieren von Sende- und Empfangsfrequenzen der zumindest einen Kommunikationsvorrichtung kann vorteilhaft das erzeugte, nicht öffentliche Netzwerk an die sich verändernden Umgebungsbedingungen der beispielhaften Baustelle angepasst werden. Ein derart ausgestaltetes Netzwerkverfahren ist besonders vorteilhaft, da durch die Ausgestaltung des Anpassens der Leistung der zumindest einen Kommunikationsvorrichtung ein Erzeugen und Anpassen eines nicht öffentlichen Netzwerks zum Senden und Empfangen von Daten durch Endgeräte, insbesondere für einen Betrieb einer Baustelle, durch ein Netzwerksystem besonders einfach ermöglicht wird.

Gemäß einer bevorzugten Weiterentwicklung der Erfindung kann bei einem Netzwerkverfahren vorgesehen sein, dass das Anpassen der Leistung der zumindest einen Kommunikationsvorrichtung zumindest einen der folgenden Schritte umfasst:
- Anpassen einer Funkabdeckung der zumindest einen Kommunikationsvorrichtung,
- Anpassen einer Signalstärke der zumindest einen Kommunikationsvorrichtung,
- Anpassen einer Signalrichtung und/oder eines Signalwinkels der zumindest einen Kommunikationsvorrichtung,
- Skalieren von virtualisierten Funknetzwerk- und/oder Core-Services der zumindest einen Kommunikationsvorrichtung.

Zusätzlich oder alternativ zu den im vorherigen Absatz voranstehenden Anpassungen der Leistung der zumindest einen Kommunikationsvorrichtung ist es besonders vorteilhaft, die Leistung der zumindest einen Kommunikationsvorrichtung mittels eines Anpassens einer Funkabdeckung der zumindest einen Kommunikationsvorrichtung, eines Anpassens einer Signalstärke der zumindest einen Kommunikationsvorrichtung, eines Anpassens einer Signalrichtung und/oder eines Signalwinkels der zumindest einen Kommunikationsvorrichtung und/oder mittels eines Skalierens von virtualisierten Funknetzwerk- und/oder Core-Services der zumindest einen Kommunikationsvorrichtung zu ermöglichen. Bevorzugt ermöglicht das erfindungsgemäße Netzwerkverfahren ein Anpassen der Signalstärke durch ein Anpassen der Leistung der zumindest einen Kommunikationsvorrichtung. Das Netzwerksystem weist für die voranstehenden Verfahrensschritte bevorzugt jeweils eine entsprechende Anpassungsvorrichtung auf oder die voranstehenden Verfahrensschritte werden durch die Logikvorrichtung ausgeführt. Ein derart ausgestaltetes Netzwerkverfahren ist besonders vorteilhaft, da durch die Ausgestaltung des Anpassens der Leistung der zumindest einen Kommunikationsvorrichtung ein Erzeugen und Anpassen eines nicht öffentlichen Netzwerks zum Senden und Empfangen von Daten durch Endgeräte, insbesondere für einen Betrieb einer Baustelle, durch ein Netzwerksystem besonders einfach ermöglicht wird.

Gemäß einer bevorzugten Weiterentwicklung der Erfindung kann bei einem Netzwerkverfahren vorgesehen sein, dass das Erfassen des zumindest einen Leistungsparameters der Kommunikationsvorrichtung und/oder der Endgeräte zumindest einen der folgenden Schritte umfasst:
- Erfassen von durch die Endgeräte genutzten Funkzellen der zumindest einen Kommunikationsvorrichtung,
- Erfassen von durch die Endgeräte genutzten Sende- und Empfangsfrequenzen der zumindest einen Kommunikationsvorrichtung,
- Erfassen von durch die Endgeräte genutzten Dienste.

Die Leistungsparameter dienen bevorzugt dem Erfassen einer tatsächlichen Leistung des nicht öffentlichen Netzwerks. Für die Bestimmung der tatsächlichen Leistung des nicht öffentlichen Netzwerks stellen das Erfassen von durch die Endgeräte genutzten Funkzellen der zumindest einen Kommunikationsvorrichtung, das Erfassen von durch die Endgeräte genutzten Sende- und Empfangsfrequenzen der zumindest einen Kommunikationsvorrichtung und/oder das Erfassen von durch die Endgeräte genutzten Dienste besonders bevorzugte Möglichkeiten zur Ermittlung und/oder für eine Grundlage des erfindungsgemäßen Anpassens der Leistung der zumindest einen Kommunikationsvorrichtung dar. Die Erfassungsvorrichtung ist als eine einzige Erfassungsvorrichtung, als eine Vielzahl von Erfassungsvorrichtungen und/oder als ein Erfassungssystem ausgestaltet. Die Erfassungsvorrichtungen sind gemeinsam oder separat voneinander ausgestaltet. Bevorzugt erfolgt eine Funkzellenselektion durch die Endgeräte. Bevorzugt ermöglicht ein Erfassen der genutzten Funkzellen der einzelnen Nutzer und/oder Endgeräte eine Detektion von Leistungsengstellen und/oder Konzentrationen, die durch ein Anpassen der Leistung und/oder der Performance der zumindest einen Kommunikationsvorrichtung vorteilhaft beeinflusst werden können.

Bevorzugt ist es ein Ziel des erfindungsgemäßen Netzwerkverfahrens, ein vorteilhaftes, insbesondere dynamisches, Anpassen der Leistung der zumindest einen Kommunikationsvorrichtung auf Grundlage der erfassten Leistungsparameter und der bereitgestellten Planungsdaten durch eine Logikvorrichtung des Netzwerksystems zu ermöglichen, insbesondere um stets eine vorteilhafte Netzabdeckung zu ermöglichen.

Ein derart ausgestaltetes Netzwerkverfahren ist besonders vorteilhaft, da durch die Ausgestaltung des Erfassens des zumindest einen Leistungsparameters der Kommunikationsvorrichtung und/oder der Endgeräte ein Erzeugen und Anpassen eines nicht öffentlichen Netzwerks zum Senden und Empfangen von Daten durch Endgeräte, insbesondere für einen Betrieb einer Baustelle, durch ein Netzwerksystem besonders einfach ermöglicht wird.

Gemäß einer bevorzugten Weiterentwicklung der Erfindung kann bei einem Netzwerkverfahren vorgesehen sein, dass das Erfassen des zumindest einen Leistungsparameters der Kommunikationsvorrichtung und/oder der Endgeräte zumindest einen der folgenden Schritte umfasst:
- Erfassen von einer durch die Endgeräte empfangenen Signalstärke,
- Erfassen von einer durch die Endgeräte empfangenen Signalqualität,
- Erfassen von einer örtlichen Position und/oder Bewegung der Endgeräte,
- Erfassen von zumindest einer Endgeräte Kategorie der Endgeräte.

Zusätzlich oder alternativ zu den im vorherigen Absatz voranstehenden Erfassungen des zumindest einen Leistungsparameters der Kommunikationsvorrichtung und/oder der Endgeräte ist es besonders vorteilhaft, den zumindest einen Leistungsparameter mittels eines Erfassens von einer durch die Endgeräte empfangenen Signalstärke, eines Erfassens von einer durch die Endgeräte empfangenen Signalqualität und/oder eines Erfassens von einer örtlichen Position und/oder Bewegung der Endgeräte zu ermöglichen. Das Erfassen von zumindest einer Endgeräte-Kategorie für die Endgeräte ermöglicht vorteilhaft eine später beschriebene Gruppierung, Klassifizierung und/oder Priorisierung der unterschiedlichen Kategorien von Endgeräten vorzunehmen. Ein Endgerät ist zumindest einer Kategorie, insbesondere genau einer Kategorie, oder mehreren Kategorien zugeordnet. Die Kategorien sind beispielsweise als Baumstruktur ausgestaltet, wobei ein Endgerät je nach Bedarf in detaillierter gegliederte Kategorien eingeteilt werden kann. Beispielhaft ermöglicht das Netzwerkverfahren eine sehr grobe Einteilung der Endgeräte in stationäre und mobile Endgeräte sowie eine weitere Unterteilung der mobilen Endgeräte in human-genutzte Endgeräte und maschinell-genutzte Endgeräte. Ein derart ausgestaltetes Netzwerkverfahren ist besonders vorteilhaft, da durch die Ausgestaltung des Erfassens des zumindest einen Leistungsparameters der Kommunikationsvorrichtung und/oder der Endgeräte ein Erzeugen und Anpassen eines nicht öffentlichen Netzwerks zum Senden und Empfangen von Daten durch Endgeräte, insbesondere für einen Betrieb einer Baustelle, durch ein Netzwerksystem besonders einfach ermöglicht wird.

Gemäß einer bevorzugten Weiterentwicklung der Erfindung kann bei einem Netzwerkverfahren vorgesehen sein, dass das Bereitstellen der Planungsdaten für eine zeitliche Entwicklung des Netzwerksystems und/oder der Baustelle zumindest einen der folgenden Schritte umfasst:
- Bereitstellen von Geodaten der Baustelle und/oder eines Projekts,
- Bereitstellen von Gebäudedaten der Baustelle und/oder eines Projekts,
- Bereitstellen von Materialdaten der Baustelle und/oder eines Projekts,
- Bereitstellen von Maschinendaten der Baustelle und/oder eines Projekts.

Die bereitgestellten Planungsdaten sind bevorzugt als theoretische Daten aus einem Planungsprozess der beispielhaften Baustelle und/oder eines Projekts zu verstehen. Die Planungsdaten umfassen bevorzugt Geodaten der Baustelle und/oder eines Projekts, Gebäudedaten der Baustelle und/oder eines Projekts, Materialdaten der Baustelle und/oder eines Projekts und/oder Maschinendaten der Baustelle und/oder eines Projekts. Die Planungsdaten sind anschaulich und beispielhaft als vorab bekannte Daten und Zeitpunkte für Größenordnungen, Eigenschaften und/oder Veränderungen der Baustelle und/oder eines Projekts zu verstehen. Die Planungsdaten dienen einer grundlegenden Auslegung des nicht öffentlichen Netzwerks zu verschiedenen Zeitpunkten und/oder Baufortschritten und ermöglichen somit eine entsprechende, geplante Anpassung der Leistung der zumindest einen Kommunikationsvorrichtung, wenn diese notwendig oder sinnvoll wird. Die Geodaten der Baustelle sind beispielhaft als eine bekannte Fläche, die von dem nicht öffentlichen Netzwerk abgedeckt werden soll, zu verstehen. Die Gebäude-, Material- und/oder Maschinendaten sind bevorzugt hinzukommende oder entfallende Einflussfaktoren über den zeitlichen Verlauf der Baustelle, die eine vorteilhafte Anpassung der Leistung der zumindest einen Kommunikationsvorrichtung ermöglichen. Ein derart ausgestaltetes Netzwerkverfahren ist besonders vorteilhaft, da durch die Ausgestaltung des Bereitstellens der Planungsdaten ein Erzeugen und Anpassen eines nicht öffentlichen Netzwerks zum Senden und Empfangen von Daten durch Endgeräte, insbesondere für einen Betrieb einer Baustelle, durch ein Netzwerksystem besonders einfach ermöglicht wird.

Gemäß einer bevorzugten Weiterentwicklung der Erfindung kann bei einem Netzwerkverfahren vorgesehen sein, dass das Bereitstellen der Planungsdaten für eine zeitliche Entwicklung des Netzwerksystems und/oder der Baustelle zumindest einen der folgenden Schritte umfasst:
- Bereitstellen von einem digitalen Zwilling der Baustelle,
- Bereitstellen von einer Bauwerksdatenmodellierung der Baustelle,
- Bereitstellen von Bauphasenzeiten der Baustelle,
- Bereitstellen von Baufortschrittdaten der Baustelle.

Zusätzlich oder alternativ zu dem im vorherigen Absatz voranstehenden Bereitstellen der Planungsdaten für eine zeitliche Entwicklung des Netzwerksystems und/oder der Baustelle ist es besonders vorteilhaft, einen digitalen Zwilling der Baustelle, Bauwerksdatenmodellierung der Baustelle, Bauphasenzeiten der Baustelle und/oder Baufortschrittdaten der Baustelle bereitzustellen. Ein Bereitstellen von detaillierteren Daten zum zeitlichen Fortschritt und/oder zur Ausgangslage der beispielhaften Baustelle ermöglicht eine verbesserte Planung, Erzeugung und Anpassung des nicht öffentlichen Netzwerks. Ein derart ausgestaltetes Netzwerkverfahren ist besonders vorteilhaft, da durch die Ausgestaltung des Bereitstellens der Planungsdaten ein Erzeugen und Anpassen eines nicht öffentlichen Netzwerks zum Senden und Empfangen von Daten durch Endgeräte, insbesondere für einen Betrieb einer Baustelle, durch ein Netzwerksystem besonders einfach ermöglicht wird.

Gemäß einer bevorzugten Weiterentwicklung der Erfindung kann bei einem Netzwerkverfahren vorgesehen sein, dass das Netzwerkverfahren, insbesondere das Anpassen, ferner zumindest einen der Verfahrensschritte umfasst:
- Kombinieren der erfassten Leistungsparameter und der bereitgestellten Planungsdaten durch die Logikvorrichtung,
- Vergleichen der erfassten Leistungsparameter und der bereitgestellten Planungsdaten durch die Logikvorrichtung,
- Analysieren der erfassten Leistungsparameter und der bereitgestellten Planungsdaten durch die Logikvorrichtung.

Das erfindungsgemäße Netzwerkverfahren, insbesondere das Anpassen der Leistung der zumindest einen Kommunikationsvorrichtung, wird besonders vorteilhaft ermöglicht, wenn die Logikvorrichtung die erfassten Leistungsparameter und die bereitgestellten Planungsdaten miteinander kombiniert, vergleicht und/oder analysiert. Beispielhaft ist die Logikvorrichtung dazu ausgestaltet, die bereitgestellten Planungsdaten durch die erfassten Leistungsparameter zu verifizieren und/oder zu überprüfen. Anschaulich formuliert ermöglicht die Logikvorrichtung somit eine Überprüfung, ob der Zeitplan der bereitgestellten Planungsdaten auch den erfassten Leistungsparametern entspricht oder ob zum Beispiel der tatsächliche Baufortschritt von den bereitgestellten Planungsdaten abweicht. Ein derart ausgestaltetes Netzwerkverfahren ist besonders vorteilhaft, da durch die Ausgestaltung der Logikvorrichtung ein Erzeugen und Anpassen eines nicht öffentlichen Netzwerks zum Senden und Empfangen von Daten durch Endgeräte, insbesondere für einen Betrieb einer Baustelle, durch ein Netzwerksystem besonders einfach ermöglicht wird.

Gemäß einer bevorzugten Weiterentwicklung der Erfindung kann bei einem Netzwerkverfahren vorgesehen sein, dass das Kombinieren, Vergleichen und/oder Analysieren ein Auswerten durch die Logikvorrichtung umfasst, wobei das Anpassen der Leistung der zumindest einen Kommunikationsvorrichtung auf Grundlage des Auswertens erfolgt. Das Auswerten des Kombinierens, Vergleichens und/oder Analysierens durch die Logikvorrichtung umfasst bevorzugt eine Berücksichtigung der erfassten Leistungsparameter und/oder bereitgestellten Daten über die Zeit. Die Leistungsparameter und/oder Daten werden bevorzugt für das Auswerten auf einer Speichervorrichtung der Logikvorrichtung gespeichert. Das Anpassen der Leistung der zumindest einen Kommunikationsvorrichtung erfolgt bevorzugt zumindest abschnittsweise automatisiert und/oder das erfindungsgemäße Netzwerkverfahren bzw. das erfindungsgemäße Netzwerksystem ermöglichen eine Entscheidung der Verfahrensschritte und/oder eine Einstellung der Systemkomponenten auf Grundlage der Planung des nicht öffentlichen Netzwerks und der Planungsdaten. Ein derart ausgestaltetes Netzwerkverfahren ist besonders vorteilhaft, da durch die Ausgestaltung der Logikvorrichtung ein Erzeugen und Anpassen eines nicht öffentlichen Netzwerks zum Senden und Empfangen von Daten durch Endgeräte, insbesondere für einen Betrieb einer Baustelle, durch ein Netzwerksystem besonders einfach ermöglicht wird.

Gemäß einer bevorzugten Weiterentwicklung der Erfindung kann bei einem Netzwerkverfahren vorgesehen sein, dass das Erfassen des zumindest einen Leistungsparameters der Kommunikationsvorrichtung und/oder der Endgeräte in Echtzeit, in regelmäßigen oder unregelmäßigen Intervallen, ereignisgesteuert, manuell oder automatisch ausgelöst erfolgt. Das erfindungsgemäße Netzwerkverfahren ist besonders vorteilhaft, wenn das Erfassen des zumindest einen Leistungsparameters der Kommunikationsvorrichtung und/oder der Endgeräte in Echtzeit, in regelmäßigen oder unregelmäßigen Intervallen, ereignisgesteuert, manuell oder automatisch ausgelöst erfolgt. Ein Erfassen in Echtzeit ermöglicht ein besonders reaktionsschnelles Anpassen der Leistung der zumindest einen Kommunikationsvorrichtung. Ein ereignisgesteuertes Erfassen und/oder ein Erfassen in Intervallen ermöglicht ein besonders energie- und rechenleistungseffizientes Anpassen der Leistung der zumindest einen Kommunikationsvorrichtung. Ein ereignisgesteuertes Erfassen des zumindest einen Leistungsparameters der Kommunikationsvorrichtung und/oder der Endgeräte erfolgt beispielsweise auf Grundlage von zeitlichen Ereignissen, insbesondere gemäß den bereitgestellten Planungsdaten, wie beispielsweise einem zeitlichen Erreichen eines neuen Bauabschnitts und/oder dem Zeitpunkt einer Montage eines Gebäudeabschnitts. Ein derart ausgestaltetes Netzwerkverfahren ermöglicht ein bedarfsgerechtes Erfassen des zumindest einen Leistungsparameters sowie ein vorteilhaftes Anpassen der Leistung der zumindest einen Kommunikationsvorrichtung auf Grundlage der erfassten Leistungsparameter und der bereitgestellten Planungsdaten durch die Logikvorrichtung des Netzwerksystems. Ein derart ausgestaltetes Netzwerkverfahren ist besonders vorteilhaft, da durch die Ausgestaltung des Erfassens des zumindest einen Leistungsparameters der Kommunikationsvorrichtung und/oder der Endgeräte ein Erzeugen und Anpassen eines nicht öffentlichen Netzwerks zum Senden und Empfangen von Daten durch Endgeräte, insbesondere für einen Betrieb einer Baustelle, durch ein Netzwerksystem besonders einfach ermöglicht wird.

Gemäß einer bevorzugten Weiterentwicklung der Erfindung kann bei einem Netzwerkverfahren vorgesehen sein, dass das Erzeugen des nicht öffentlichen Netzwerks gemäß zumindest einem Kommunikationsstandard für Endgeräte, insbesondere einem Mobilfunkstandard zumindest der vierten, fünften oder sechsten Generation, erfolgt. Der Mobilfunkstandard zumindest der vierten, fünften oder sechsten Generation ist gemäß deren Definition zum Zeitpunkt der Anmeldung zu verstehen. Ein Erzeugen des nicht öffentlichen Netzwerks gemäß zumindest einem Kommunikationsstandard ermöglicht eine besonders einfache Nutzung des nicht öffentlichen Netzwerks mit vorhandenen Endgeräten sowie eine effiziente Einrichtung der Nutzung durch die Endgeräte. Bevorzugt erzeugt die zumindest eine Kommunikationsvorrichtung zumindest ein nicht öffentliches Netzwerk gemäß dem 5G Mobilfunkstandard. Zusätzlich oder alternativ erzeugt die zumindest eine Kommunikationsvorrichtung weitere oder alternative nicht öffentliche Netzwerke mit alternativen oder gleichen Mobilfunkstandards. Ein derart ausgestaltetes Netzwerkverfahren ist besonders vorteilhaft, da durch die Ausgestaltung des Erzeugens des zumindest einen nicht öffentlichen Netzwerks zum Senden und Empfangen von Daten durch Endgeräte durch zumindest eine Kommunikationsvorrichtung des Netzwerksystems ein Erzeugen und Anpassen eines nicht öffentlichen Netzwerks zum Senden und Empfangen von Daten durch Endgeräte, insbesondere für einen Betrieb einer Baustelle, durch ein Netzwerksystem besonders einfach ermöglicht wird.

Gemäß einer bevorzugten Weiterentwicklung der Erfindung kann bei einem Netzwerkverfahren vorgesehen sein, dass das Netzwerkverfahren, insbesondere das Erfassen und/oder Anpassen, ferner zumindest einen der Verfahrensschritte umfasst:
- Gruppieren von Endgeräten,
- Klassifizieren von Endgeräten,
- Priorisieren von Endgeräten.

Das erfindungsgemäße Netzwerkverfahren, insbesondere das Erfassen und/oder Anpassen, wird bevorzugt besonders effizient ermöglicht, wenn die Endgeräte in dem nicht öffentlichen Netzwerk gruppiert, klassifiziert und/oder priorisiert werden. Eine entsprechende Einordnung der Endgeräte ermöglicht vereinfachend eine Betrachtung durch Anwender und/oder beispielsweise eine Auswertung durch die Logikvorrichtung auf Grundlage von gruppierten Endgeräten. Eine bevorzugte Gruppierung und Priorisierung sehen beispielsweise eine Unterscheidung von Endgeräten für menschliche Anwender und für Roboter als Anwender vor. In diesem Beispiel werden die Endgeräte von Robotern und/oder Maschinen höher priorisiert als die Endgeräte von menschlichen Anwendern, um einen vorteilhaften und/oder sicheren Betrieb zu ermöglichen. Anschaulich beschrieben kann der menschliche Anwender besser und/oder sicherer mit beispielsweise einem kurzzeitigen Netzwerkverlust umgehen, als ein maschineller und/oder Roboter-Anwender von einem Endgerät. Ein derart ausgestaltetes Netzwerkverfahren ermöglicht beispielsweise vorteilhaft, dass lediglich eine reduzierte Anzahl an Gruppen anstelle von allen Endgeräten berücksichtigt und/oder analysiert wird, sodass ein Rechenaufwand für die Logikvorrichtung reduziert wird. Das Gruppieren, Klassifizieren und/oder Priorisieren der Endgeräte erfolgt bevorzugt durch die Logikvorrichtung. Ein derart ausgestaltetes Netzwerkverfahren ist besonders vorteilhaft, da durch das Gruppieren, Klassifizieren und/oder Priorisieren ein Erzeugen und Anpassen eines nicht öffentlichen Netzwerks zum Senden und Empfangen von Daten durch Endgeräte, insbesondere für einen Betrieb einer Baustelle, durch ein Netzwerksystem besonders einfach ermöglicht wird.

Gemäß einer bevorzugten Weiterentwicklung der Erfindung kann bei einem Netzwerkverfahren vorgesehen sein, dass das Netzwerkverfahren ferner zumindest einen der Verfahrensschritte umfasst:
- Bereitstellen der Daten zur angepassten Leistung durch die Logikvorrichtung,
- Ausgeben der Daten zur angepassten Leistung durch eine Ausgabevorrichtung des Netzwerksystems.

Das Bereitstellen der Daten zur angepassten Leistung erfolgt bevorzugt über eine Schnittstelle. Das Bereitstellen der Daten zur angepassten Leistung erfolgt bevorzugt zur Verarbeitung durch weitere Systeme oder eine Ausgabevorrichtung. Das Ausgeben der Daten zur angepassten Leistung erfolgt bevorzugt visuell, akustisch oder haptisch durch die Ausgabevorrichtung. Bevorzugt ermöglicht das Netzwerkverfahren ferner das Bereitstellen und/oder die Ausgabe der voranstehend beschriebenen weiteren Daten, Vergleiche und/oder Auswertungen. Das Bereitstellen und/oder das Ausgeben der angepassten Leistung ermöglicht eine Verwendung der Daten durch einen Anwender, Systeme und/oder weitere Vorrichtungen. Ein derart ausgestaltetes Netzwerkverfahren ist besonders vorteilhaft, da durch das Bereitstellen und/oder Ausgeben der Daten zur angepassten Leistung ein Erzeugen und Anpassen eines nicht öffentlichen Netzwerks zum Senden und Empfangen von Daten durch Endgeräte, insbesondere für einen Betrieb einer Baustelle, durch ein Netzwerksystem besonders einfach ermöglicht wird.

Gemäß einem zweiten Aspekt der Erfindung wird die Aufgabe durch ein Netzwerksystem zum Erzeugen und Anpassen eines nicht öffentlichen Netzwerks zum Senden und Empfangen von Daten durch Endgeräte, insbesondere für einen Betrieb einer Baustelle, gelöst. Das Netzwerksystem umfasst zumindest eine Kommunikationsvorrichtung zum Senden und Empfangen von Daten und eine Logikvorrichtung zur Anpassung einer Leistung der zumindest einen Kommunikationsvorrichtung. Das Netzwerksystem umfasst ferner eine Erfassungsvorrichtung und eine Schnittstellenvorrichtung, wobei die Erfassungsvorrichtung zur Erfassung von Leistungsparametern der Kommunikationsvorrichtung und/oder der Endgeräte ausgestaltet ist, wobei die Schnittstellenvorrichtung zum Bereitstellen von Planungsdaten für eine zeitliche Entwicklung des Netzwerksystems und/oder der Baustelle ausgestaltet ist und wobei die Logikvorrichtung zur Anpassung der Leistung der zumindest einen Kommunikationsvorrichtung auf Grundlage der erfassten Leistungsparameter und der bereitgestellten Planungsdaten ausgestaltet ist. Ein derart ausgestaltetes Netzwerksystem ist besonders vorteilhaft, da ein Erzeugen und Anpassen eines nicht öffentlichen Netzwerks zum Senden und Empfangen von Daten durch Endgeräte, insbesondere für einen Betrieb einer Baustelle, durch das Netzwerksystem besonders einfach ermöglicht wird.

Gemäß einer bevorzugten Weiterentwicklung der Erfindung kann bei einem Netzwerksystem vorgesehen sein, dass das Netzwerksystem zum Ausführen des Netzwerkverfahrens gemäß dem ersten Aspekt ausgestaltet ist. Bei dem beschriebenen Netzwerksystem ergeben sich somit sämtliche Vorteile, die bereits zu dem Netzwerkverfahren gemäß dem ersten Aspekt der Erfindung beschrieben worden sind.

Gemäß einem dritten Aspekt der Erfindung wird die Aufgabe durch ein Computerprogrammprodukt zum Erzeugen und Anpassen eines nicht öffentlichen Netzwerks zum Senden und Empfangen von Daten durch Endgeräte durch ein Netzwerksystem gelöst. Das Computerprogrammprodukt umfasst Befehle, die bewirken, dass das Netzwerksystem gemäß dem zweiten Aspekt die Verfahrensschritte gemäß dem ersten Aspekt ausführt. Bei dem beschriebenen Computerprogrammprodukt ergeben sich somit sämtliche Vorteile, die bereits zu dem Netzwerkverfahren gemäß dem ersten Aspekt der Erfindung beschrieben worden sind.

Gemäß einem vierten Aspekt der Erfindung wird die Aufgabe durch ein computerlesbares Medium, auf dem das Computerprogrammprodukt gemäß dem dritten Aspekt gespeichert ist, gelöst. Bei dem beschriebenen computerlesbaren Medium ergeben sich somit sämtliche Vorteile, die bereits zu dem Netzwerkverfahren gemäß dem ersten Aspekt der Erfindung beschrieben worden sind.

Ein erfindungsgemäßes Netzwerkverfahren sowie ein Netzwerksystem werden nachfolgend anhand von Zeichnungen näher erläutert. Es zeigen jeweils schematisch:
- Figur 1: in einer perspektivischen Ansicht ein Netzwerksystem zum Erzeugen und Anpassen eines nicht öffentlichen Netzwerks zum Senden und Empfangen von Daten durch Endgeräte,
- Figur 2: in einem Flussdiagramm eine erfindungsgemäße Ausgestaltung des Netzwerkverfahrens, und
- Figur 3: in einer perspektivischen Ansicht ein Computerprogrammprodukt und ein computerlesbares Medium.

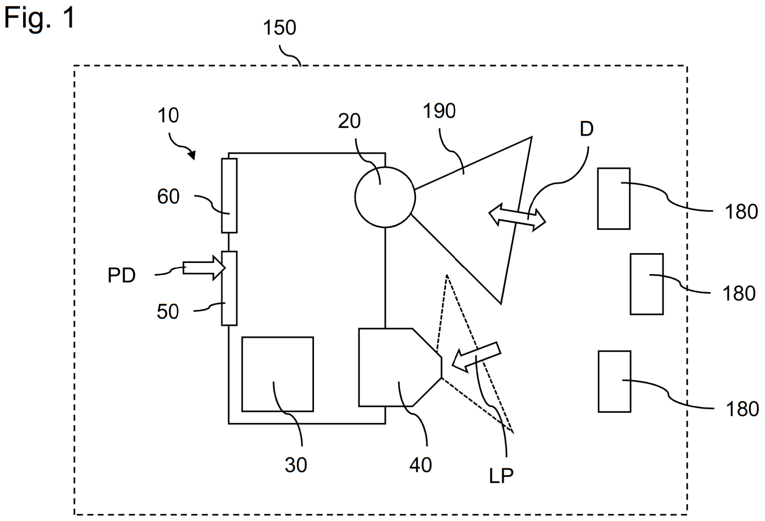

Elemente mit gleicher Funktion und Wirkungsweise sind in den Fig. 1 bis 3 jeweils mit denselben Bezugszeichen versehen.

In Fig. 1 ist schematisch in einer perspektivischen Ansicht ein Netzwerksystem 10 zum Erzeugen und Anpassen eines nicht öffentlichen Netzwerks 190 zum Senden und Empfangen von Daten D durch Endgeräte 180 für einen Betrieb einer Baustelle 150 gezeigt. Das Netzwerksystem 10 umfasst zumindest eine Kommunikationsvorrichtung 20 zum Erzeugen 202 eines nicht öffentlichen Netzwerks 190 zum Senden und Empfangen von Daten D durch Endgeräte 180. Das Netzwerksystem 10 umfasst eine Erfassungsvorrichtung 40 zum Erfassen 204 zumindest eines Leistungsparameters LP der Kommunikationsvorrichtung 20 und/oder der Endgeräte 180. Das Netzwerksystem 10 umfasst eine Schnittstellenvorrichtung 50 zum Bereitstellen 206 von Planungsdaten PD für eine zeitliche Entwicklung des Netzwerksystems 10 und/oder der Baustelle 150. Das Netzwerksystem 10 umfasst eine Logikvorrichtung 30 zum Anpassen 208 einer Leistung der zumindest einen Kommunikationsvorrichtung 20 auf Grundlage der erfassten Leistungsparameter LP und der bereitgestellten Planungsdaten PD. Die Logikvorrichtung 30 ist zum Bereitstellen 210 der Daten zur angepassten Leistung ausgestaltet. Das Netzwerksystem 10 umfasst eine Ausgabevorrichtung 60 zum Ausgeben 212 der Daten zur angepassten Leistung.

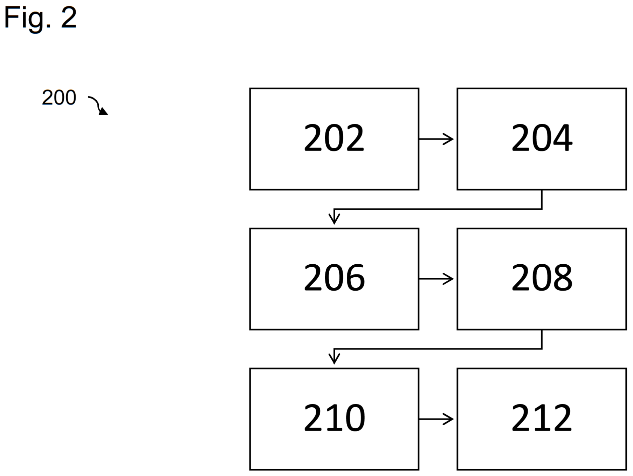

In Fig. 2 ist schematisch in einem Flussdiagramm eine erfindungsgemäße Ausgestaltung des Netzwerkverfahrens 200 gezeigt. Für eine verbesserte Übersichtlichkeit sind in Fig. 2 nur die Bezugszeichen der Verfahrensschritte angegeben. Das Netzwerkverfahren 200 umfasst in einem ersten Verfahrensschritt das Erzeugen 202 eines nicht öffentlichen Netzwerks 190 zum Senden und Empfangen von Daten D durch Endgeräte 180 durch zumindest eine Kommunikationsvorrichtung 20 des Netzwerksystems 10. Das Netzwerkverfahren 200 umfasst in einem weiteren Verfahrensschritt das Erfassen 204 zumindest eines Leistungsparameters LP der Kommunikationsvorrichtung 20 und/oder der Endgeräte 180 durch eine Erfassungsvorrichtung 40 des Netzwerksystems 10. Das Netzwerkverfahren 200 umfasst in einem weiteren Verfahrensschritt das Bereitstellen 206 von Planungsdaten PD für eine zeitliche Entwicklung des Netzwerksystems 10 und/oder der Baustelle 150 durch eine Schnittstellenvorrichtung 50 des Netzwerksystems 10. Das Netzwerkverfahren 200 umfasst in einem weiteren Verfahrensschritt das Anpassen 208 einer Leistung der zumindest einen Kommunikationsvorrichtung 20 auf Grundlage der erfassten Leistungsparameter LP und der bereitgestellten Planungsdaten PD durch eine Logikvorrichtung 30 des Netzwerksystems 10. Das Netzwerkverfahren 200 umfasst in einem weiteren Verfahrensschritt das Bereitstellen 210 der Daten zur angepassten Leistung durch die Logikvorrichtung 30. Das Netzwerkverfahren 200 umfasst in einem weiteren Verfahrensschritt das Ausgeben 212 der Daten zur angepassten Leistung durch eine Ausgabevorrichtung 60 des Netzwerksystems 10.

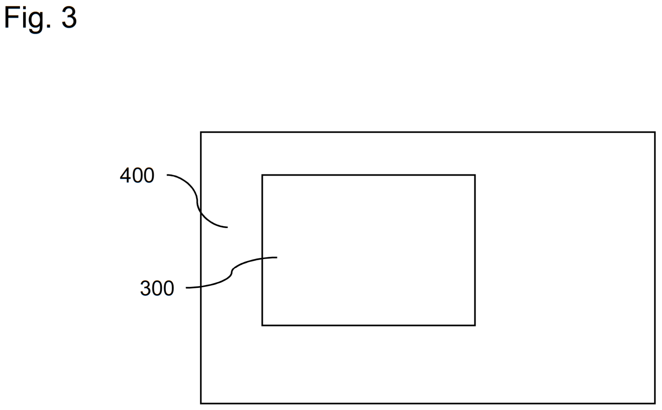

In Fig. 3 sind schematisch in einer perspektivischen Ansicht ein Computerprogrammprodukt 300 und ein computerlesbares Medium 400 gezeigt. Das Computerprogrammprodukt 300 ist zum Erzeugen und Anpassen eines nicht öffentlichen Netzwerks 190 (nicht gezeigt) zum Senden und Empfangen von Daten D (nicht gezeigt) durch Endgeräte 180 (nicht gezeigt) durch ein Netzwerksystem 10 (nicht gezeigt) ausgestaltet.

### Bezugszeichenliste

- 10: Netzwerksystem
- 20: Kommunikationsvorrichtung
- 30: Logikvorrichtung
- 40: Erfassungsvorrichtung
- 50: Schnittstellenvorrichtung
- 60: Ausgabevorrichtung

- 150: Baustelle

- 180: Endgeräte
- 190: Nicht öffentliches Netzwerk

- 200: Netzwerkverfahren
- 202: Erzeugen
- 204: Erfassen
- 206: Bereitstellen
- 208: Anpassen
- 210: Bereitstellen
- 212: Ausgeben

- 300: Computerprogrammprodukt
- 400: Computerlesbares Medium

- D: Daten
- LP: Leistungsparameter
- PD: Planungsdaten

## Patentansprüche

1. Netzwerkverfahren (200) zum Erzeugen (202) und Anpassen (208) eines nicht öffentlichen Netzwerks (190) zum Senden und Empfangen von Daten (D) durch Endgeräte (180), insbesondere für einen Betrieb einer Baustelle (150), durch ein Netzwerksystem (10), das Netzwerkverfahren (200) umfassend:
- Erzeugen (202) eines nicht öffentlichen Netzwerks (190) zum Senden und Empfangen von Daten (D) durch Endgeräte (180) durch zumindest eine Kommunikationsvorrichtung (20) des Netzwerksystems (10),
- Erfassen (204) zumindest eines Leistungsparameters (LP) der Kommunikationsvorrichtung (20) und/oder der Endgeräte (180) durch eine Erfassungsvorrichtung (40) des Netzwerksystems (10),
- Bereitstellen (206) von Planungsdaten (PD) für eine zeitliche Entwicklung des Netzwerksystems (10) und/oder der Baustelle (150) durch eine Schnittstellenvorrichtung (50) des Netzwerksystems (10),
- Anpassen (208) einer Leistung der zumindest einen Kommunikationsvorrichtung (20) auf Grundlage der erfassten Leistungsparameter (LP) und der bereitgestellten Planungsdaten (PD) durch eine Logikvorrichtung (30) des Netzwerksystems (10).

2. Netzwerkverfahren (200) nach Anspruch 1,
**dadurch gekennzeichnet,**
**dass** das Anpassen (208) der Leistung der zumindest einen Kommunikationsvorrichtung (20) zumindest einen der folgenden Schritte umfasst:
- Anpassen einer Höhe der zumindest einen Kommunikationsvorrichtung (20), insbesondere durch eine Veränderung eines Sendemastturms,
- Aktivieren und/oder Deaktivieren weiterer Kommunikationsvorrichtungen (20),
- Anpassen, Aktivieren und/oder Deaktivieren von Sende- und Empfangsfrequenzen der zumindest einen Kommunikationsvorrichtung (20).

3. Netzwerkverfahren (200) nach einem der vorangegangenen Ansprüche,
**dadurch gekennzeichnet,**
**dass** das Anpassen (208) der Leistung der zumindest einen Kommunikationsvorrichtung (20) zumindest einen der folgenden Schritte umfasst:
- Anpassen einer Funkabdeckung der zumindest einen Kommunikationsvorrichtung (20),
- Anpassen einer Signalstärke der zumindest einen Kommunikationsvorrichtung (20),
- Anpassen einer Signalrichtung und/oder eines Signalwinkels der zumindest einen Kommunikationsvorrichtung (20),
- Skalieren von virtualisierten Funknetzwerk- und/oder Core-Services der zumindest einen Kommunikationsvorrichtung (20).

4. Netzwerkverfahren (200) nach einem der vorangegangenen Ansprüche,
**dadurch gekennzeichnet,**
**dass** das Erfassen (204) des zumindest einen Leistungsparameters (LP) der Kommunikationsvorrichtung (20) und/oder der Endgeräte (180) zumindest einen der folgenden Schritte umfasst:
- Erfassen von durch die Endgeräte (180) genutzten Funkzellen der zumindest einen Kommunikationsvorrichtung (20),
- Erfassen von durch die Endgeräte (180) genutzten Sende- und Empfangsfrequenzen der zumindest einen Kommunikationsvorrichtung (20),
- Erfassen von durch die Endgeräte (180) genutzten Dienste,
- Erfassen von einer durch die Endgeräte (180) empfangenen Signalstärke,
- Erfassen von einer durch die Endgeräte (180) empfangenen Signalqualität,
- Erfassen von einer örtlichen Position und/oder Bewegung der Endgeräte (180),
- Erfassen von zumindest einer Endgeräte Kategorie der Endgeräte (180).

5. Netzwerkverfahren (200) nach einem der vorangegangenen Ansprüche,
**dadurch gekennzeichnet,**
**dass** das Bereitstellen (206) der Planungsdaten (PD) für eine zeitliche Entwicklung des Netzwerksystems (10) und/oder der Baustelle (150) zumindest einen der folgenden Schritte umfasst:
- Bereitstellen von Geodaten der Baustelle (150),
- Bereitstellen von Gebäudedaten der Baustelle (150),
- Bereitstellen von Materialdaten der Baustelle (150),
- Bereitstellen von Maschinendaten der Baustelle (150),
- Bereitstellen von einem digitalen Zwilling der Baustelle (150),
- Bereitstellen von einer Bauwerksdatenmodellierung der Baustelle (150),
- Bereitstellen von Bauphasenzeiten der Baustelle (150),
- Bereitstellen von Baufortschrittdaten der Baustelle (150).

6. Netzwerkverfahren (200) nach einem der vorangegangenen Ansprüche,
**dadurch gekennzeichnet,**
**dass** das Netzwerkverfahren (200), insbesondere das Anpassen (208), ferner zumindest einen der folgenden Verfahrensschritte umfasst:
- Kombinieren der erfassten Leistungsparameter (LP) und der bereitgestellten Planungsdaten (PD) durch die Logikvorrichtung (30),
- Vergleichen der erfassten Leistungsparameter (LP) und der bereitgestellten Planungsdaten (PD) durch die Logikvorrichtung (30),
- Analysieren der erfassten Leistungsparameter (LP) und der bereitgestellten Planungsdaten (PD) durch die Logikvorrichtung (30).

7. Netzwerkverfahren (200) nach Anspruch 6,
**dadurch gekennzeichnet,**
**dass** das Kombinieren, Vergleichen und/oder Analysieren ein Auswerten durch die Logikvorrichtung (30) umfasst, wobei das Anpassen (208) der Leistung der zumindest einen Kommunikationsvorrichtung (20) auf Grundlage des Auswertens erfolgt.

8. Netzwerkverfahren (200) nach einem der vorangegangenen Ansprüche,
**dadurch gekennzeichnet,**
**dass** das Erfassen (204) des zumindest einen Leistungsparameters (LP) der Kommunikationsvorrichtung (20) und/oder der Endgeräte (180) in Echtzeit, in regelmäßigen oder unregelmäßigen Intervallen, ereignisgesteuert, manuell oder automatisch ausgelöst erfolgt.

9. Netzwerkverfahren (200) nach einem der vorangegangenen Ansprüche,
**dadurch gekennzeichnet,**
**dass** das Erzeugen (202) des nicht öffentlichen Netzwerks (190) gemäß zumindest einem Kommunikationsstandard für Endgeräte (180), insbesondere einem Mobilfunkstandard zumindest der vierten, fünften oder sechsten Generation, erfolgt.

10. Netzwerkverfahren (200) nach einem der vorangegangenen Ansprüche,
**dadurch gekennzeichnet,**
**dass** das Netzwerkverfahren (200), insbesondere das Erfassen (204) und/oder Anpassen (208), ferner zumindest einen der Verfahrensschritte umfasst:
- Gruppieren von Endgeräten (180),
- Klassifizieren von Endgeräten (180),
- Priorisieren von Endgeräten (180).

11. Netzwerkverfahren (200) nach einem der vorangegangenen Ansprüche,
**dadurch gekennzeichnet,**
**dass** das Netzwerkverfahren (200) ferner zumindest einen der Verfahrensschritte umfasst:
- Bereitstellen (210) der Daten zur angepassten Leistung durch die Logikvorrichtung (30),
- Ausgeben (212) der Daten zur angepassten Leistung durch eine Ausgabevorrichtung (60) des Netzwerksystems (10).

12. Netzwerksystem (10) zum Erzeugen und Anpassen eines nicht öffentlichen Netzwerks (190) zum Senden und Empfangen von Daten (D) durch Endgeräte (180), insbesondere für einen Betrieb einer Baustelle (150), das Netzwerksystem (10) umfassend zumindest eine Kommunikationsvorrichtung (20) zum Senden und Empfangen von Daten (D) und eine Logikvorrichtung (30) zur Anpassung einer Leistung der zumindest einen Kommunikationsvorrichtung (20),
**dadurch gekennzeichnet,**
**dass** das Netzwerksystem (10) eine Erfassungsvorrichtung (40) und eine Schnittstellenvorrichtung (50) umfasst, wobei die Erfassungsvorrichtung (40) zur Erfassung von Leistungsparametern (LP) der Kommunikationsvorrichtung (20) und/oder der Endgeräte (180) ausgestaltet ist, wobei die Schnittstellenvorrichtung (50) zum Bereitstellen von Planungsdaten (PD) für eine zeitliche Entwicklung des Netzwerksystems (10) und/oder der Baustelle (150) ausgestaltet ist und wobei die Logikvorrichtung (30) zur Anpassung der Leistung der zumindest einen Kommunikationsvorrichtung (20) auf Grundlage der erfassten Leistungsparameter (LP) und der bereitgestellten Planungsdaten (PD) ausgestaltet ist.

13. Netzwerksystem (10) nach Anspruch 12,
**dadurch gekennzeichnet,**
**dass** das Netzwerksystem (10) zum Ausführen des Netzwerkverfahrens (200) nach einem der Ansprüche 1 bis 11 ausgestaltet ist.

14. Computerprogrammprodukt (300) zum Erzeugen und Anpassen eines nicht öffentlichen Netzwerks (190) zum Senden und Empfangen von Daten (D) durch Endgeräte (180) durch ein Netzwerksystem (10),
**dadurch gekennzeichnet,**
**dass** das Computerprogrammprodukt (300) Befehle umfasst, die bewirken, dass das Netzwerksystem (10) gemäß Anspruch 12 oder 13 die Verfahrensschritte nach einem der Ansprüche 1 bis 11 ausführt.

15. Computerlesbares Medium (400), auf dem das Computerprogrammprodukt (300) nach Anspruch 14 gespeichert ist.
